# EUROPÄISCHE PATENTSCHRIFT

(11) **EP 2 546 642 B1**
(45) Veröffentlichungstag und Bekanntmachung des Hinweises auf die Patenterteilung: **16.05.2018**
(21) Anmeldenummer: 12175419.6
(22) Anmeldetag: 06.07.2012
(51) Int. Cl.: G01N 29/07, G01N 29/22, G01N 29/44, G01N 29/04

(54) **VORRICHTUNG UND VERFAHREN ZUR ÜBERWACHUNG EINER DREHENDEN WELLE MITTELS LONGITUDINALER ULTRASCHALLWELLEN**
DEVICE AND METHOD TO MONITOR A ROTATING SHAFT USING LONGITUDINAL ULTRASOUND WAVES
DISPOSITIF ET PROCÉDÉ DE SURVEILLANCE D'UN ARBRE EN ROTATION AU MOYEN D'ONDES À ULTRASONS LONGITUDINALES

(30) Priorität: 12.07.2011 DE 102011051761
(43) Veröffentlichungstag der Anmeldung: 16.01.2013
(73) Patentinhaber: BAM Bundesanstalt für Materialforschung und -prüfung, 12205 Berlin (DE)
(72) Erfinder: HECKEL, Thomas, 14532 Kleinmachnow (DE); GOHLKE, Dirk, 14612 Falkensee (DE); KLINGER, Christian, 12159 Berlin (DE)
(74) Vertreter: Zimmermann & Partner Patentanwälte mbB

(56) Entgegenhaltungen:
- EP-A1- 2 270 487
- US-A- 3 022 660
- US-A- 4 899 590
- US-A1- 2009 320 599
- Viktor Jemec ET AL: "AUTOMATION OF PROCEDURES AND CONTROLS OF RAILWAY MATERIALS AT CONDITION BASED MAINTENANCE", , 1. Januar 2009 (2009-01-01), Seiten 91-107, XP055117746, Gefunden im Internet: URL:http://citeseerx.ist.psu.edu/viewdoc/d ownload;jsessionid=139D94780153CD398F9F125 89F31AEBE?doi=10.1.1.160.7958&rep=rep1&typ e=pdf [gefunden am 2014-05-13]
- Ernesto García Ares ET AL: "Automatic In-service Train Axle Inspection Systems", 9th European NDT Conference, 1. Januar 2006 (2006-01-01), XP055118330, Gefunden im Internet: URL:http://www.ndt.net/article/ecndt2006/d oc/Fr.1.3.1.pdf [gefunden am 2014-05-15]

## Beschreibung

Die vorliegende Erfindung betrifft eine Vorrichtung sowie ein zugehöriges Verfahren zur Online-Überwachung einer drehenden Welle mittels longitudinaler Ultraschallwellen.

Wellen, insbesondere Hohlwellen, werden in vielfältiger Weise zur Übertragung von Drehmomenten genutzt, wie etwa als Generatorwellen in Kraftwerken oder Radsatzwellen in Schienenfahrzeugen. Dabei sind Wellen häufig wesentliche bzw. sicherheitsrelevante Bauteile der jeweiligen Gesamtsysteme, in die sie eingebettet sind. Ein Versagen der Welle, beispielsweise aufgrund einer Rißbildung, kann daher erhebliche Auswirkungen haben.

Beispielsweise sind Wellen mit Längsbohrung, sogenannte Hohlwellen, eines der wichtigsten sicherheitsrelevanten Bauteile von Schienenfahrzeugen, insbesondere Schienenfahrzeugen des Hochgeschwindigkeitsverkehrs. Diese Wellen werden während der Fertigung und im Betrieb nach regelmäßigen Laufzeitintervallen (z.B. alle 240.000 km bei Schienenfahrzeugen) bzw. in regelmäßigen Prüfintervallen einer detaillierten zerstörungsfreien Ultraschallprüfung im Rahmen von Wartungsarbeiten unterzogen. Die Prüfintervalle wurden entsprechend der auftretenden Mängel nach Erfahrungswerten festgelegt. Teilweise sind sehr kurze Prüfintervalle notwendig, um die Sicherheit der Bauteile zu gewährleisten. Für die herkömmliche Ultraschallprüfung müssen die Fahrzeuge bzw. Anlagen typischerweise außer Betrieb genommen werden. Daraus ergeben sich bei kurzen Prüfintervallen häufige und dadurch auch insgesamt lange Stillstandzeiten. Für die Prüfung selbst ist ein hoher Personalaufwand im Schichtbetrieb notwendig, insbesondere wenn Prüfungen nur nachts durchgeführt werden können. US2009320599 A1 beschreibt ein Verfahren zur Inspektion rotierender Antriebswellen, das auf einem stirnseitig aufgesetzten Wandler basiert. Die Autoren Viktor Jemec und Janez Grum (2009) beschreiben in "Automation of Procedures of Controls of Railway Materials at Condition Based Maintenance" 10th Intl. Conf. Slovenian Soc. Non-Destructive Testing, Ljubljana, Sept. 1-3, pp. 91-107 die Automatisierung von Abläufen und Kontrollen zur zustandsorientierten Instandhaltung von rollendem Material bei der Eisenbahn Sloveniens.

Ernesto Garcia Ares et al. (2006) beschreiben in "Automatic In-service Train Axle Inspection Systems", 9th European NDT Conference, 1. Januar 2006, pp. 1-12 das zugehörige Inspektionssystem.

Im Hinblick darauf ist es daher eine Aufgabe der vorliegenden Erfindung, ein Verfahren und eine Vorrichtung bereitzustellen, die die genannten Nachteile des herkömmlichen Prüfverfahrens zumindest teilweise überwinden.

Diese Aufgabe wird gelöst durch ein Verfahren gemäß Anspruch 1, eine Vorrichtung gemäß Anspruch 10 sowie eine Verwendung gemäß den Ansprüchen 16 oder 18 Weitere Aspekte, Einzelheiten, Vorteile und Merkmale der vorliegenden Erfindung ergeben sich aus den Unteransprüchen, der Beschreibung sowie den beigefügten Zeichnungen.

Gemäß einem Ausführungsbeispiel der vorliegenden Erfindung umfaßt ein Verfahren zur Online-Überwachung einer drehenden Welle das Anregen mindestens einer longitudinalen Ultraschallwelle in der drehenden Welle, das Aufnehmen eines Ultraschall-Echosignals, und das Auswerten des Ultraschall-Echosignals, um zu erkennen, ob die drehende Welle eine Veränderung, insbesondere einen Fehler wie etwa einen Riß, aufweist.

Mit Hilfe dieses Verfahrens ist insbesondere eine Online-Zustandsüberwachung der Welle möglich. Insbesondere kann die Welle im Betrieb überwacht werden und muß zum Zwecke der Prüfung nicht erst ausgebaut werden bzw. in eine spezielle Prüfumgebung gebracht werden. Beispielsweise können auf diese Weise Radsatzwellen von Schienenfahrzeugen sogar während des Fahrbetriebs überwacht werden. Dies bedeutet eine deutliche Erweiterung des Sicherheitskonzeptes, da ein heranwachsender Defekt im laufenden Betrieb zerstörungsfrei erkannt werden kann und umgehend auf die Situation reagiert werden kann. Die Online-Überwachung führt zur Vermeidung bzw. Verringerung von Stillstandszeiten, der Erhöhung der Betriebssicherheit der Bauteile sowie zur Einsparung von Prüfpersonal. Insbesondere ist das Verfahren zur effizienten Strukturüberwachung der Welle geeignet, da Veränderungen in der gesamten Struktur erfaßt werden.

In diesem Zusammenhang wird darauf hingewiesen, daß für die Zwecke der Ultraschallprüfung an Hohlwellen grundsätzlich drei voneinander verschiedene Wellenarten zu unterscheiden sind, nämlich die vorliegend verwendeten Longitudinalwellen, Transversalwellen und geführte Wellen. So weist beispielsweise Stahl eine konstante Schallgeschwindigkeit von c₁ = 5.920 m/s für Longitudinalwellen und eine konstante Schallgeschwindigkeit von cₜ = 3.255 m/s für Transversalwellen auf. Hingegen ist für geführte Wellen die Gruppengeschwindigkeit c_{G} frei zwischen 0 m/s und 5920 m/s einstellbar. Weiterhin sind Longitudinalwellen und Transversalwellen nicht dispersiv, wohingegen geführte Wellen, bis auf die Torsionsmode 0. Ordnung, Dispersion zeigen. Insbesondere koppeln geführte Moden Longitudinal- und Transversalanteile, so daß selbst bei z.B. rein longitudinaler Anregung die sich ausbildende geführte Welle für die Zwecke der Messung nicht-vernachlässigbare Transversalanteile aufweist. Hingegen weisen Longitudinalwellen für die Zwecke der Messung keine bzw. vernachlässigbare Transversalanteile auf. Gleichermaßen weisen Transversalwellen für die Zwecke der Messung keine bzw. vernachlässigbare Longitudinalanteile auf. Erfindungsgemäß werden zum Anregen und/oder Aufnehmen ein oder mehrere Ultraschallwandler an mindestens einer Stirnseite der drehenden Welle vorgesehen. Dadurch kann das gesamte Wellenvolumen der Radsatzwelle mit einer möglichst geringen Anzahl von Sensoren überwacht werden. Typischerweise wird die drehende Welle auf ihrer gesamten Länge mit Longitudinalwellen durchschallt. Die Sensoren können hierfür direkt auf der Stirnfläche und/oder im Bohrungsgrund von Befestigungsbohrungen für das Wellenlager angekoppelt werden. Erfindungsgemäß wird das Verfahren im Normalbetrieb der Welle durchgeführt. Auf diese Weise muß die Welle zum Zwecke der Prüfung nicht erst ausgebaut werden bzw. in eine spezielle Prüfumgebung gebracht werden. Beispielsweise können auf diese Weise Radsatzwellen von Schienenfahrzeugen sogar während des Fahrbetriebs überwacht werden. Die Überwachung im Normalbetrieb führt zur Vermeidung bzw. Verringerung von Stillstandszeiten, der Erhöhung der Betriebssicherheit der Bauteile sowie zur Einsparung von Prüfpersonal.

Gemäß einer Weiterbildung beschallt und/oder überwacht ein jeweiliger Ultraschallwandler ein definiertes Winkelsegment der Welle. Auf diese Weise kann das gesamte Wellenvolumen der Radsatzwelle mit einer möglichst geringen Anzahl von Sensoren überwacht werden.

Weiterhin erfolgt gemäß einer Ausführungsform die Aufnahme des Ultraschall-Echosignals mit einer Abtastfrequenz von mindestens der 10-fachen Mittenfrequenz eines jeweiligen Ultraschallwandlers. Mit anderen Worten kann die Signalaufnahme im Hochfrequenzmodus erfolgen, wobei für typische Abmessungen von Radsatzwellen beispielsweise Ultraschallwandler im Frequenzbereich zwischen 1 MHz und 10 MHz verwendet werden können.

Gemäß einem weiteren Ausführungsbeispiel wird beim Auswerten ein Anteil des Ultraschall-Echosignals, der auf der Form der drehenden Welle beruht, bestimmt. Da drehende Wellen typischerweise eine von der simplen Zylinderform abweichende komplexe Geometrie aufweisen, weist bereits ein Echosignal der drehenden Welle im Urzustand eine komplexe Signatur auf. Beispielsweise werden Querschnittsübergänge der drehenden Welle Echosignaturen verursachen. Diese sind jedoch durch die Bauteilgeometrie bedingt und von den später zu erkennenden Veränderungen zu unterscheiden. Dies kann gemäß einer Weiterbildung dadurch erfolgen, daß das aufgenommene Ultraschall-Echosignal mit einem Referenzsignal verglichen wird, um den Anteil des Ultraschall-Echosignals, der auf der Form der drehenden Welle beruht, zu bestimmen. Das Referenzsignal kann beispielsweise bei der Fertigung der Welle oder direkt nach dem Einbau der Welle aufgenommen werden.

Typischerweise wird für den Anteil des Ultraschall-Echosignals, der auf der Form der drehenden Welle beruht, mindestens ein Toleranzbereich berücksichtigt, wobei der Toleranzbereich insbesondere die Temperatur und/oder die Verformung der Welle unter Last berücksichtigen kann. Durch die Bewegung der Welle unter Last biegt sich die Welle typischerweise etwas durch. Daher sind im Lastfall geringfügig unterschiedliche Echosignaturen zu erwarten als für den lastfreien Fall. Um die Toleranzbereiche zu bestimmen kann man beispielsweise die Echosignaturen der Welle für unterschiedliche Lastzustände aufnehmen. Mit Hilfe statistischer Methoden können dann Toleranzbänder für die Referenzsignaturen im Zeitbereich ermittelt werden. Zusätzlich oder alternativ kann auch der Einfluss der Temperatur bei der Berechnung der Toleranzbänder berücksichtigt werden.

Gemäß einer Weiterbildung werden bei der Auswertung Bandpassfilter im Zeitbereich und eine Frequenzanalyse verwendet, um durch den Betrieb der Welle verursachte Störsignale zu erkennen. Der Betrieb der Welle, beispielsweise der Fahrbetrieb eines Schienenfahrzeugs, verursacht akustische Störsignale, die die Auswertung des Echosignals erschweren. Der Einsatz von Bandpaßfiltern im Zeitbereich kann solche Störeinflüsse im Echosignal mindern.

Gemäß einem weiteren Ausführungsbeispiel kann das aufgenommene Ultraschall-Echosignal mit einem Referenzsignal, das in einer früheren Messung aufgenommen wurde, verglichen werden, um eine Veränderung der drehenden Welle zu erkennen oder nachzuverfolgen. Auf diese Weise ist eine Online-Strukturüberwachung der drehenden Welle möglich. Im Unterschied zu dem bereits geschilderten Vergleich mit der "neuen" Welle kann durch dieses Verfahren eine bereits entdeckte Veränderung, beispielsweise ein Riß, in ihrer Entwicklung beobachtet werden. Solange der Riß unterhalb einer kritischen Größe bleibt, muß beispielsweise kein Austausch der Welle erfolgen.

Gemäß noch einem Ausführungsbeispiel wird das aufgenommene Ultraschall-Echosignal mit einem Referenzsignal verglichen wird, um Änderungen, die auf eine Fehlfunktion des Meßsystems hindeuten, zu erkennen. Insbesondere können Unterschiede zum Referenzsignal, die nicht einer Bauteilveränderung der drehenden Welle, wie z.B. Alterung, Rißbildung etc., zugeordnet werden können, auf eine Fehlfunktion des Meßsystems, z.B. eines Ultraschallwandlers, hindeuten. Auch können systematische Änderungen beispielsweise auf ein Driftphänomen hindeuten. Auf diese Weise kann durch das Verfahren bei jeder Messung auf die Funktionsfähigkeit des Meßsystems überprüft werden. Erfindungsgemäß umfasst die Vorrichtung zur Online-Überwachung einer drehenden Welle im Normalbetrieb außer der Welle selbst einen oder mehrere an mindestens einer Stirnseite der drehenden Welle angeordnete Ultraschallwandler zum Anregen mindestens einer longitudinalen Ultraschallwelle in der drehenden Welle und zum Aufnehmen eines Ultraschall-Echosignals, und eine Auswerteeinheit zum Auswerten des Ultraschall-Echosignals, um zu erkennen, ob die drehende Welle eine Veränderung, insbesondere einen Fehler wie etwa einen Riß, aufweist.

Diese Vorrichtung erlaubt insbesondere eine Online-Zustandsüberwachung der drehenden Welle, so daß die Welle zum Zwecke der Prüfung nicht erst ausgebaut bzw. in eine spezielle Prüfumgebung gebracht werden muß. Beispielsweise können durch die Vorrichtung Generatorwellen während des Generatornormalbetriebs überwacht werden. Ebenso können mittels der Vorrichtung Radsatzwellen von Schienenfahrzeugen während des Fahrbetriebs überwacht werden. Der Einsatz einer Ultraschallprüftechnik unter Ausnutzung von longitudinalen Wellen läßt sich kostengünstig in die Welle integrieren und kommt ohne verschleißbehaftete Komponenten aus. Das Meßsystem ist zuverlässig, robust und unempfindlich gegen Verschmutzung und bei geeigneter Energieversorgung nahezu wartungsfrei und somit für den Feldeinsatz bestens geeignet.

Gemäß einer Weiterbildung ist an gegenüberliegenden Stirnseiten der drehenden Welle jeweils mindestens ein Ultraschallwandler angeordnet. Durch Anordnung an gegenüberliegenden Stirnseiten kann die Auflösung des Meßsystems verbessert werden. Gemäß einer Ausführungsform sind drei Ultraschallwandler im Winkelabstand von jeweils 120° zueinander oder vier Ultraschallwandler im Winkelabstand von jeweils 90° zueinander an einer Stirnseite der drehenden Welle angeordnet.

Gemäß einer weiteren Ausführungsform weist die Auswerteeinheit eine Vorortelektronik auf, die in einer Längsbohrung der drehenden Welle angeordnet und mit dem einen oder den mehreren Ultraschallwandlern verbunden ist. Weiterhin kann die Auswerteeinheit ein Ultraschallgerät und/oder einen Signalprozessor und/oder ein Datenerfassungsgerät aufweisen, wobei die Vorortelektronik mit mindestens einer dieser weiteren Einrichtungen signaltechnisch verbunden ist.

Gemäß einer Weiterbildung ist die drehende Welle an einer jeweiligen Stirnseite in einem Lager gelagert ist, welches eine Kabeldurchführung, beispielsweise in einem Lagerdeckel, aufweist. Beispielsweise kann die Kabeldurchführung mittels eines Rotationsübertragers, beispielsweise induktiv oder als Schleifring, ausgeführt sein. Der eine oder die mehreren Ultraschallwandler können über die Kabeldurchführung mit der Auswerteeinheit und/oder einer Energieversorgung verbunden sein.

Gemäß einer Weiterbildung sind der eine oder die mehreren Ultraschallwandler und/oder die Auswerteelektronik eingerichtet, sich mittels Energy Harvesting selbst mit ausreichender Energie zu versorgen. Als Energy Harvesting wird hierbei insbesondere die Erzeugung von elektrischer Energie aus der Umgebung, beispielsweise der Umgebungstemperatur, Vibrationen, Rotationen oder Luftströmungen, verstanden. Solche Energiequellen, beispielsweise für drahtlose Sensornetzwerke, können insbesondere piezoelektrische Kristalle zur Wandlung von Vibrationen in elektrische Energie oder thermoelektrische Generatoren zur Ausnutzung von Temperaturunterschieden umfassen.

Die Verfahren und/oder Vorrichtungen gemäß den Ausführungsbeispielen der vorliegenden Erfindung können insbesondere zur Überwachung einer Radsatzwelle in einem Schienenfahrzeug während des Betriebs verwendet werden. Dabei kann gemäß einer Weiterbildung bei Detektion eines Fehlers ein Signal an das Betriebspersonal des Schienenfahrzeugs übermittelt und/oder das Schienenfahrzeug selbsttätig abgebremst oder angehalten werden.

Die Verfahren und/oder Vorrichtungen gemäß den Ausführungsbeispielen der vorliegenden Erfindung können beispielsweise auch zur Überwachung einer Motorwelle oder einer Generatorwelle während des Betriebs des Motors bzw. des Generators verwendet werden.

Anhand der beigefügten Zeichnungen werden nun Ausführungsbeispiele der vorliegenden Erfindung erläutert. Dabei zeigt:
- Fig. 1: eine schematische Darstellung einer Vorrichtung gemäß einem Ausführungsbeispiel der vorliegenden Erfindung.
- Fig. 2: eine Frontansicht einer Hohlwelle.
- Fig. 3: eine seitliche Schnittansicht einer Vorrichtung gemäß einem weiteren Ausführungsbeispiel.
- Fig. 4: eine Frontansicht der Hohlwelle aus Fig. 3.
- Fig. 5: eine seitliche Schnittansicht einer Vorrichtung gemäß noch einem weiteren Ausführungsbeispiel.

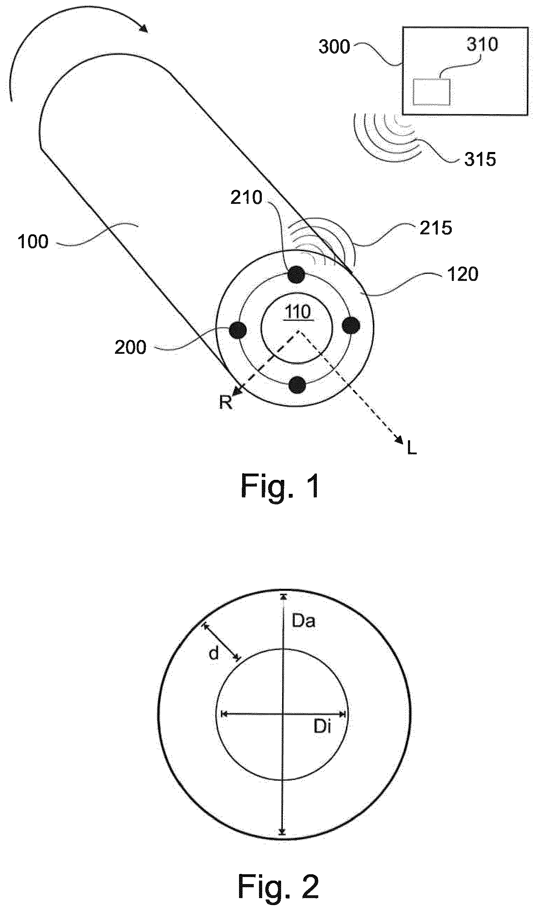

Die Fig. 1 zeigt eine schematische Darstellung einer Vorrichtung zur Überwachung einer Welle 100 gemäß einem Ausführungsbeispiel der vorliegenden Erfindung. Die Welle 100 ist als Hohlwelle mit einer Innenbohrung 110 ausgebildet. Weiterhin ist die Welle 100 um ihre Längsachse L drehend gelagert, wie durch den Pfeil in Fig. 1 angedeutet. Die Vorrichtung umfaßt mehrere Ultraschallwandler 200, die in Umfangsrichtung der Welle 100 angeordnet sind. Die Ultraschallwandler 200 sind jeweils eingerichtet, eine longitudinale Ultraschallwelle in die drehende Welle einzukoppeln. Typischerweise sind die Ultraschallwandler 200 ebenfalls zum Aufnehmen eines Ultraschall-Echosignals aus der Welle 100 eingerichtet. Beispielsweise können die Ultraschallwandler 200 dazu im Impuls-Echo-Verfahren betrieben werden.

Die Vorrichtung umfaßt weiterhin eine Auswerteeinheit 300 zum Auswerten des Ultraschall-Echosignals. Die Auswerteeinheit ist eingerichtet, zu erkennen, ob die drehende Welle eine Veränderung, insbesondere einen Fehler wie etwa einen Riß, aufweist. Bei der Auswertung wird das Ultraschall-Echosignal typischerweise zeitlich und spektral analysiert. Dies kann beispielsweise mittels einer Kurzzeit-Fourier-Transformation oder allgemeiner durch eine Wavelet-Transformation, insbesondere eine Fast-Wavelet-Transformation, erfolgen, wobei die jeweiligen Zeitfenster geeignet zu wählen sind.

In dem gezeigten Ausführungsbeispiel ist die Auswerteeinheit 300 separat von den Ultraschallwandlern 200 und nicht an der drehenden Welle 100 angeordnet. Dadurch kann die Auswerteeinheit 300 geschützt angeordnet werden und ist nicht den rauhen Betriebsbedingungen der drehenden Welle ausgesetzt. Allerdings muß eine Datenverbindung von den Ultraschallwandlern 200 zu der Auswerteeinheit 300 hergestellt werden, damit die aufgenommenen Echosignale an die Auswerteeinheit weitergegeben werden können. Im gezeigten Ausführungsbeispiel ist dazu an einem der Ultraschallwandler weiterhin eine Signalübermittlungseinheit 210 bereitgestellt, die die aufgenommenen Ultraschall-Echosignale den Ultraschallwandlern 200 an die Auswerteeinheit 300 mittels Funk 215 überträgt. Die Ultraschallwandler 200 sind miteinander datentechnisch verbunden, so daß sie ihre jeweiligen Daten an die Signalübermittlungseinheit 210 übermitteln können. Alternativ kann beispielsweise jeder Ultraschallwandler 200 mit einer eigenen Signalübermittlungseinheit 210 ausgestattet werden. Die Auswerteeinheit 300 umfaßt ein Sende- und Empfangsteil 310, das eingerichtet ist, die von der Signalübermittlungseinheit 210 übermittelten Daten zu empfangen. Weiterhin ist das Sende- und Empfangsteil 310 typischerweise eingerichtet, Daten, beispielsweise Steuerbefehle, von der Auswerteeinheit 300 an die Signalübermittlungseinheit 210 zu übertragen.

Die Energieversorgung des Meßsystems an der drehenden Welle 100, d.h. der Ultraschallwandler und ggf. der Vorortelektronik kann beispielsweise über Batterien erfolgen. Da diese aber regelmäßig getauscht werden müssen, könnte eine Energieversorgung beispielsweise über das Sende- und Empfangsteil 310 erfolgen, das elektromagnetische Strahlung an das Meßsystem überträgt und so ausreichend mit Energie versorgt. Zusätzlich oder alternativ kann das Meßsystem, aber auch die Auswerteelektronik selbst, mit einer Einrichtung zum Energy Harvesting versehen sein. Als Energy Harvesting wird hierbei insbesondere die Erzeugung von elektrischer Energie aus der Umgebung, beispielsweise der Umgebungstemperatur, Vibrationen oder Luftströmungen, verstanden. Solche Energiequellen, beispielsweise für drahtlose Sensornetzwerke, können insbesondere piezoelektrische Kristalle zur Wandlung von Vibrationen in elektrische Energie oder thermoelektrische Generatoren zur Ausnutzung von Temperaturunterschieden umfassen. Auf diese Weise wäre das Meßsystem bzw. die Vorrichtung gänzlich autark.

In Fig. 2 ist eine Frontansicht der Hohlwelle 100 gezeigt. Dabei ist die Welle kreiszylindrisch mit einem Außendurchmesser Da, einem Innendurchmesser Di und einer Dicke D des Zylindermantels. Beispielsweise kann bei einer Radsatzwelle eines Schienenfahrzeugs der Außendurchmesser Da = 160 mm und der Innendurchmesser Di = 60 mm sein, so daß die Dicke der Welle d = 50 mm beträgt. Werden nun beispielsweise Longitudinalwellen im Bereich Frequenzbereich von f = 1 MHz bis 10 MHz angeregt, so liegt f*d hier im Bereich von 5×10⁴ m/s bis 5×10⁵ m/s bzw. 50 MHz*mm bis 500 MHz*mm.

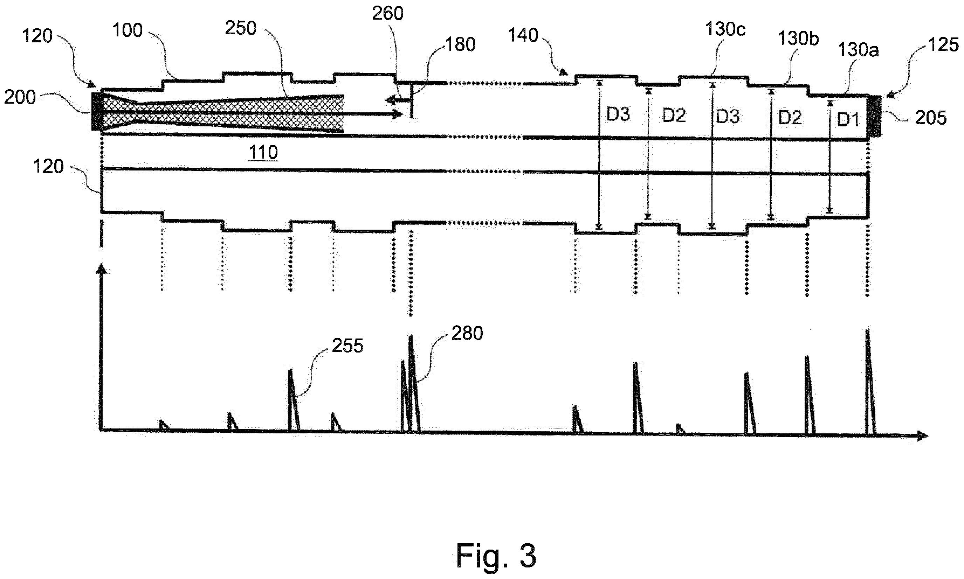

In Fig. 3 ist eine seitliche Schnittansicht einer Vorrichtung gemäß einem weiteren Ausführungsbeispiel gezeigt. Darin ist eine Radsatzwelle 100 eines Schienenfahrzeugs gezeigt, die als Hohlwelle ausgebildet ist und eine Innenbohrung 110 aufweist. Weiterhin weist die Radsatzwelle 100 eine komplexe Geometrie mit mehreren Abschnitten unterschiedlichen Außendurchmessers auf. So weist die Radsatzwelle 100 Abschnitte 130a mit einem ersten Außendurchmesser D1, Abschnitte 130b mit einem zweiten Außendurchmesser D2 und Abschnitte 130c mit einem dritten Außendurchmesser D3 auf, wobei der Außendurchmesser D1 kleiner als der Außendurchmesser D2 und der Außendurchmesser D2 kleiner als der Außendurchmesser D3 ist. Zwischen den jeweiligen Abschnitten 130a, 130b, 130c bestehen daher Querschnittsübergänge 140, in denen sich der Wellenquerschnitt jeweils vergrößert bzw. verkleinert, je nachdem aus welcher Richtung man den Übergang betrachtet. Im gezeigten Ausführungsbeispiel sind an gegenüberliegenden Stirnflächen 120, 125 der Radsatzwelle 100 jeweilige Ultraschallwandler 200, 205 angebracht. Die Anbringung der Ultraschallwandler 200, 205 erfolgt erfindungsgemäß mittels Klebstoff, um einen definierten akustischen Kontakt herzustellen. Alternativ oder zusätzlich kann erfindungsgemäß eine mechanische Halterung vorgesehen sein, die einen jeweiligen Ultraschallwandler mit einem definiertem Andruck in Position hält.

Der Ultraschallwandler 200 erzeugt einen Ultraschallimpuls, der sich als Longitudinalwelle 250 in der Radsatzwelle 100 ausbreitet. Dabei breitet sich der Schall nicht nur auf der Linie des Zentralstrahles aus, sondern in einem Winkelbereich. Dieser Winkelbereich ist im wesentlichen abhängig von dem Durchmesser des Schwingers und der Resonanzfrequenz des Ultraschallwandlers. Typischerweise wird der Winkelbereich auf die zu untersuchende Geometrie der Radsatzwelle angepaßt. Der Schall 250 breitet sich durch die gesamte Länge der Radsatzwelle aus. Trifft der Schall 250 dabei auf eine Grenzfläche, so wird er an ihr reflektiert und liefert einen Echoimpuls an den Sensor zurück.

Eine solches Echosignal ist schematisch als A-Bild-Darstellung im unteren Teil der Fig. 3 gezeigt. Hierbei wird die Echoamplitude über dem Schallweg dargestellt. Jede Reflexionsstelle, die der Schall auf seinem Weg durch die Radsatzwelle passiert, erzeugt in Abhängigkeit von ihrer Geometrie und Lage zum Zentralstrahl des Schallfeldes 250 einen Echoimpuls. Dabei erzeugt insbesondere auch die Geometrie der Radsatzwelle 100 Echoimpulse 255 mit definierten Höhen an definierten Positionen. Wie in Fig. 3 gezeigt, können diese Echoimpulse 255 den jeweiligen Querschnittsübergängen 140 der Radsatzwelle 100 zugeordnet werden. Auf diese Weise bilden diese Echoimpulse eine individuelle Signatur, die abhängig von der individuellen Geometrie der Welle und der jeweiligen Position des Ultraschallwandlers 200, 205 ist. Beispielsweise kann diese Signatur der Welle nach der Fertigung oder direkt nach dem Einbau der Welle aufgenommen werden, so daß die Signatur der Welle im unveränderten Zustand bekannt ist.

Tritt nun während des Fahrbetriebes beispielsweise eine rißartige Schädigung 180 an der Welle auf, so verändert sich die Signatur durch das Auftreten zusätzlicher Echoimpulse 280 sowie der Änderung der individuellen Echohöhen gegenüber der ursprünglichen Signatur. Solche Abweichungen von der ursprünglichen Signatur können mit Hilfe von Signalverarbeitungsalgorithmen und Mustererkennungsverfahren ermittelt werden. Wird eine Abweichung detektiert, insbesondere eine Abweichung über einer kritischen Grenze, so kann eine Meldung an übergeordnete Systeme ausgelöst werden.

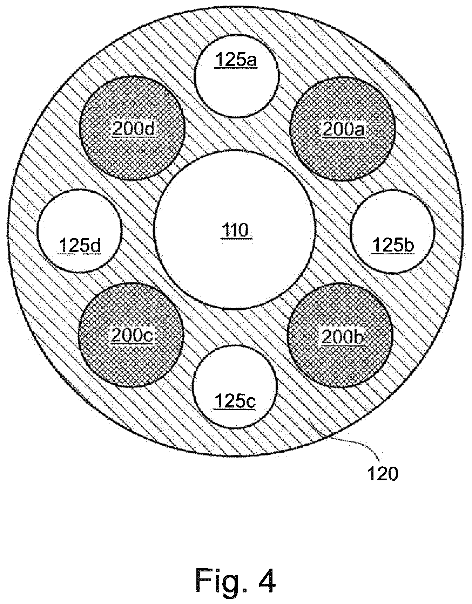

Die Fig. 4 zeigt eine Frontansicht der Hohlwelle aus Fig. 3. Die Hohlwelle weist eine zentrale Innenbohrung 110 auf, deren Durchmesser Di beispielsweise für Radsatzwellen eines Schienenfahrzeugs im Bereich zwischen 25 mm und 90 mm liegen kann. Weiterhin sind mit einem jeweiligen Winkelabstand von 120° Befestigungsbohrungen 125a, 125b, 125c, 125d für das Wellenlager angeordnet. Weiterhin sind vier Ultraschallwandler 200a, 200b, 200c, 200d an der Stirnseite 120 der drehenden Welle in einem jeweiligen Winkelabstand von 90° zwischen den Befestigungsbohrungen 125a, 125b, 125c, 125d montiert. Die Befestigung der Ultraschallwandler erfolgt erfindungsgemäß beispielsweise durch Kleben und/oder durch eine mechanische Halterung. Weiterhin können die Ultraschallwandler auch im Bohrungsgrund der Befestigungsbohrungen 125a, 125b, 125c, 125d angeordnet werden.

Alternativ zu der gezeigten Anordnung könnten beispielsweise auch nur drei Ultraschallwandler, beispielsweise mit einem jeweiligen Winkelabstand von 120° angebracht sein, insbesondere bei Wellentypen, die drei um 120° versetzte Befestigungsbohrungen aufweisen. Gemäß einem anderen Ausführungsbeispiel ist nur ein einziger Ultraschallwandler an der Stirnseite 120 der Welle 100 befestigt. Grundsätzlich kann aber jede beliebige Zahl von Ultraschallwandlern an der Stirnseite 120 befestigt sein.

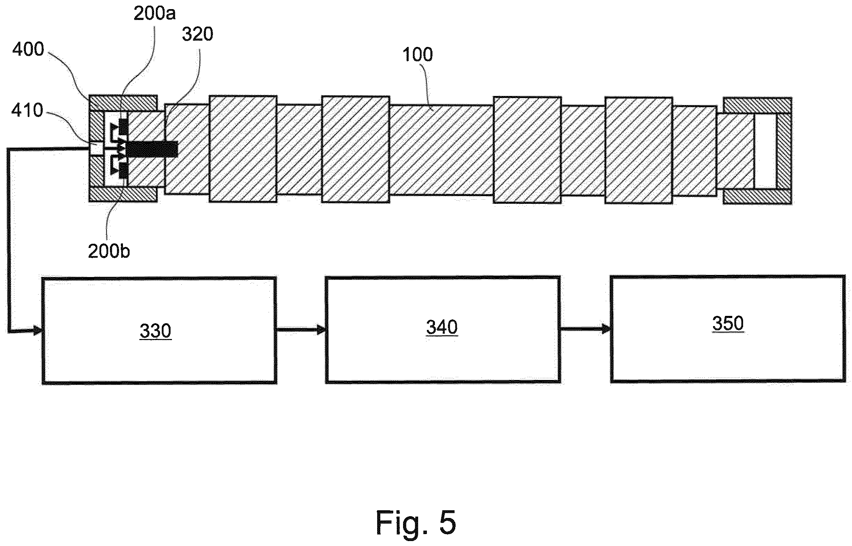

In Fig. 5 ist eine seitliche Schnittansicht einer Vorrichtung gemäß noch einem weiteren Ausführungsbeispiel gezeigt. Darin ist ebenfalls eine Radsatzwelle 100 gezeigt, die eine komplexe Geometrie mit mehreren Querschnittsübergängen aufweist. Die Radsatzwelle ist an ihren gegenüberliegenden Enden in einem jeweiligen Lager 400 gelagert, wobei der gezeigte Teil des Lagers drehfest angeordnet ist, d.h. sich nicht mit der Welle dreht.

Auf einer Stirnseite der Radsatzwelle 100 sind Ultraschallwandler 200a, 200b angebracht. Gemäß weiteren Ausführungsformen können auch mehr oder weniger Ultraschallwandler an der Stirnseite angebracht sein bzw. auch auf der gegenüberliegenden Stirnseite angebracht sein. Weiterhin umfaßt die Vorrichtung eine Vorortelektronik 320, die in einer Innenbohrung der Radsatzwelle 100 aufgenommen ist. Die Vorortelektronik 320 ist mit den Ultraschallwandlern 200a, 200b verbunden, so daß die Vorortelektronik 320 die Ultraschallwandler 200a, 200b ansteuern kann bzw. Meßdaten von den Ultraschallwandlern 200a, 200b aufnehmen kann. Die Vorortelektronik 320 ist weiterhin über eine Kabelverbindung mit einem Ultraschallgerät 330 verbunden, das Teil der Auswerteeinheit ist und die Vorortelektronik 320 ansteuern kann. Für die elektrische Signalübertragung zwischen der rotierenden Vorortelektronik 320 und dem nicht rotierenden Lager 400 wird eine Kabeldurchführung 410 beispielsweise als Rotationsübertrager ausgeführt. Der Rotationsübertrager kann beispielsweise als Schleifringübertrager oder induktiver Übertrager ausgebildet sein.

Die Auswerteeinheit umfaßt neben dem Ultraschallgerät 330 einen Signalprozessor 340 sowie eine Datenerfassungseinheit 350. Die vom Ultraschallgerät 320 aufgenommenen Meßdaten können mit Hilfe des Signalprozessors 340 ausgewertet und die Ergebnisse an die Datenerfassungseinheit 350 weitergeleitet und dort beispielsweise gespeichert werden. Dabei können das Ultraschallgerät 330, der Signalprozessor 340 und die Datenerfassungseinheit 350 als separate Geräte oder in integrierter Form ausgebildet sein.

Die nun folgenden Erläuterungen betreffen grundsätzlich alle Auswertungsverfahren gemäß den Ausführungsformen der vorliegenden Erfindung, insofern sich für den Fachmann nichts anderes aus der Konfiguration bzw. den speziellen Umständen einer spezifischen Ausführungsform ergibt.

Typischerweise wird beim Auswerten ein Anteil des Ultraschall-Echosignals, der auf der Form der drehenden Welle beruht, bestimmt. Da drehende Wellen typischerweise eine von der simplen Zylinderform abweichende komplexe Geometrie aufweisen, weist bereits ein Echosignal der unveränderten und fehlerfreien Welle eine komplexe Signatur auf. Beispielsweise werden Querschnittsübergänge der drehenden Welle Echosignaturen verursachen. Diese sind jedoch durch die Bauteilgeometrie bedingt und von den später zu erkennenden Veränderungen zu unterscheiden. Dies kann gemäß einer Weiterbildung dadurch erfolgen, daß das aufgenommene Ultraschall-Echosignal mit einem Referenzsignal verglichen wird, um den Anteil des Ultraschall-Echosignals, der auf der Form der drehenden Welle beruht, zu bestimmen. Das Referenzsignal hierfür kann beispielsweise bei der Fertigung der Welle oder direkt nach dem Einbau der Welle aufgenommen werden. Ein geeignetes Kriterium kann bei der Erkennung beispielsweise die Symmetrie der reflektierten Signale sein. Typischerweise sollte die rotationssymmetrische Geometrie der drehenden Welle und auch der Formeinflüsse (z.B. Querschnittsübergänge) auch rotationssymmetrische Echos erzeugen, wohingegen Fehler, wie etwa ein Riß, nicht rotationssymmetrisch sind und folglich ebensolche Schwingungskomponenten erzeugen.

Typischerweise wird für den Anteil des Ultraschall-Echosignals, der auf der Form der drehenden Welle beruht, mindestens ein Toleranzbereich berücksichtigt, wobei der Toleranzbereich insbesondere die Temperatur und/oder die Verformung der Welle unter Last berücksichtigen kann. Durch die Bewegung der Welle unter Last biegt sich die Welle typischerweise etwas durch. Daher sind im Lastfall geringfügig unterschiedliche Echosignaturen zu erwarten als für den lastfreien Fall. Um die Toleranzbereiche zu bestimmen kann man beispielsweise die Echosignaturen der Welle für unterschiedliche Lastzustände aufnehmen. Mit Hilfe statistischer Methoden können dann Toleranzbänder für die Referenzsignaturen im Zeitbereich ermittelt werden. Zusätzlich oder alternativ kann auch der Einfluss der Temperatur bei der Berechnung der Toleranzbänder berücksichtigt werden.

Gemäß einer Weiterbildung werden bei der Auswertung Bandpassfilter im Zeitbereich und eine Frequenzanalyse verwendet, um durch den Betrieb der Welle verursachte Störsignale zu erkennen. Der Betrieb der Welle, beispielsweise der Fahrbetrieb eines Schienenfahrzeugs, verursacht akustische Störsignale, die die Auswertung des Echosignals erschweren. Der Einsatz von Bandpaßfiltern im Zeitbereich kann solche Störeinflüsse im Echosignal mindern.

Weiterhin kann das aufgenommene Ultraschall-Echosignal mit einem Referenzsignal, das in einer früheren Messung aufgenommen wurde, verglichen werden, um eine Veränderung der drehenden Welle zu erkennen oder nachzuverfolgen. Auf diese Weise ist eine Online-Strukturüberwachung der drehenden Welle möglich. Im Unterschied zu dem bereits geschilderten Vergleich mit der "neuen" Welle kann durch dieses Verfahren eine bereits entdeckte Veränderung, beispielsweise ein Riß, in ihrer Entwicklung beobachtet werden. Solange der Riß unterhalb einer kritischen Größe bleibt, muß beispielsweise kein Austausch der Welle erfolgen. Überschreitet der Riß jedoch eine kritische Größe, so kann die Auswerteeinheit beispielsweise ein Hinweissignal absetzen und/oder die Anlage bzw. das Schienenfahrzeug, in dem die Welle eingebaut ist, abbremsen oder stillegen. Zur effizienten Strukturüberwachung der Welle sollten Veränderungen in der gesamten Struktur erfaßt werden. Das hier vorgeschlagene Meßsystem ist zuverlässig, robust und unempfindlich gegen Verschmutzung und bei geeigneter Energieversorgung nahezu wartungsfrei und somit für den Feldeinsatz bestens geeignet.

Darüber hinaus kann das aufgenommene Ultraschall-Echosignal mit einem Referenzsignal verglichen werden, um Änderungen, die auf eine Fehlfunktion des Meßsystems hindeuten, zu erkennen. Insbesondere können Unterschiede zum Referenzsignal, die nicht einer Bauteilveränderung der drehenden Welle, wie z.B. Alterung, Rißbildung etc., zugeordnet werden können, auf eine Fehlfunktion des Meßsystems, z.B. eines Ultraschallwandlers, hindeuten. Auch können systematische Änderungen beispielsweise auf ein Driftphänomen hindeuten. Auf diese Weise kann durch das Verfahren bei jeder Messung auf die Funktionsfähigkeit des Meßsystems überprüft werden.

Die Verfahren und/oder Vorrichtungen gemäß einem der vorangehend beschriebenen Ausführungsbeispiele können insbesondere zur Überwachung einer Radsatzwelle in einem Schienenfahrzeug während des Betriebs verwendet werden. Dabei kann insbesondere bei Detektion eines Fehlers ein Signal an das Betriebspersonal des Schienenfahrzeugs übermittelt und/oder das Schienenfahrzeug selbsttätig abgebremst oder angehalten werden.

Weiterhin können die Verfahren und/oder Vorrichtungen gemäß einem der vorangehen beschriebenen Ausführungsbeispiele insbesondere zur Überwachung einer Motorwelle oder einer Generatorwelle während des Betriebs des Motors bzw. des Generators verwendet werden.

Die vorliegende Erfindung wurde anhand von Ausführungsbeispielen erläutert. Diese Ausführungsbeispiele sind jedoch lediglich beispielhaft und sollen keinesfalls als einschränkend für die vorliegende Erfindung verstanden werden.

## Patentansprüche

1. Verfahren zur Online-Überwachung einer drehenden Welle während des Normalbetriebs, umfassend
Bereitstellen eines Ultraschallwandlers, der mittels Klebstoff und/oder einer mechanischen Halterung an einer Stirnseite der drehenden Welle angebracht ist;
Anregen einer longitudinalen Ultraschallwelle in der drehenden Welle,
Aufnehmen eines Ultraschall-Echosignals, und
Auswerten des Ultraschall-Echosignals, um zu erkennen, ob die drehende Welle eine Veränderung, insbesondere einen Fehler wie etwa einen Riß, aufweist,
wobei zum Anregen und/oder Aufnehmen ein oder mehrere Ultraschallwandler an mindestens einer Stirnseite der drehenden Welle vorgesehen sind.

2. Verfahren nach einem der vorhergehenden Ansprüche, wobei ein jeweiliger Ultraschallwandler ein definiertes Winkelsegment der Welle beschallt und/oder überwacht.

3. Verfahren nach einem der vorhergehenden Ansprüche, wobei die Aufnahme des Ultraschall-Echosignals mit einer Abtastfrequenz von mindestens der 10-fachen Mittenfrequenz eines jeweiligen Ultraschallwandlers erfolgt.

4. Verfahren nach einem der vorhergehenden Ansprüche, wobei beim Auswerten ein Anteil des Ultraschall-Echosignals, der auf der Form der drehenden Welle beruht, bestimmt wird.

5. Verfahren nach Anspruch 4, wobei das aufgenommene Ultraschall-Echosignal mit einem Referenzsignal verglichen wird, um den Anteil des Ultraschall-Echosignals, der auf der Form der drehenden Welle beruht, zu bestimmen.

6. Verfahren nach Anspruch 4 oder 5, wobei für den Anteil des Ultraschall-Echosignals, der auf der Form der drehenden Welle beruht, mindestens ein Toleranzbereich berücksichtigt wird, wobei der Toleranzbereich insbesondere die Temperatur und/oder die Verformung der Welle unter Last berücksichtigen kann.

7. Verfahren nach einem der vorhergehenden Ansprüche, wobei bei der Auswertung Bandpassfilter im Zeitbereich und eine Frequenzanalyse verwendet werden, um durch den Betrieb der Welle verursachte Störsignale zu erkennen.

8. Verfahren nach einem der vorhergehenden Ansprüche, wobei das aufgenommene Ultraschall-Echosignal mit einem Referenzsignal, das in einer früheren Messung aufgenommen wurde, verglichen wird, um eine Veränderung der drehenden Welle zu erkennen oder nachzuverfolgen.

9. Verfahren nach einem der vorhergehenden Ansprüche, wobei das aufgenommene Ultraschall-Echosignal mit einem Referenzsignal verglichen wird, um Änderungen, die auf eine Fehlfunktion des Meßsystems hindeuten, zu erkennen.

10. Vorrichtung zur Online-Überwachung einer drehenden Welle (100) während des Normalbetriebs, umfassend die Welle (100), einen oder mehrere an mindestens einer Stirnseite (120) der drehenden Welle (100) mittels Klebstoff und/oder einer mechanischen Halterung angebrachte Ultraschallwandler (200, 200a, 200b, 200c, 200d, 205) zum Anregen mindestens einer longitudinalen Ultraschallwelle (250) in der drehenden Welle und zum Aufnehmen eines Ultraschall-Echosignals (260), und
eine Auswerteeinheit (300, 310, 320, 330, 340, 350) zum Auswerten des Ultraschall-Echosignals (260), um zu erkennen, ob die drehende Welle eine Veränderung, insbesondere einen Fehler wie etwa einen Riß, aufweist, wobei an gegenüberliegenden Stirnseiten (120, 125) der drehenden Welle (100) jeweils mindestens ein Ultraschallwandler (200, 205) angeordnet ist.

11. Vorrichtung nach Anspruch 10 , wobei drei Ultraschallwandler im Winkelabstand von jeweils 120° zueinander oder vier Ultraschallwandler (200a, 200b, 200c, 200d) im Winkelabstand von jeweils 90° zueinander an einer Stirnseite (120) der drehenden Welle (100) angeordnet sind.

12. Vorrichtung nach einem der Ansprüche 10 oder 11, wobei die Auswerteeinheit eine Vorortelektronik (320) umfaßt, die in einer Längsbohrung (110) der drehenden Welle (100) angeordnet und mit dem einen oder den mehreren Ultraschallwandlern (200, 200a, 200b, 200c, 200d, 205) verbunden ist.

13. Vorrichtung nach Anspruch 12, wobei die Auswerteeinheit weiterhin ein Ultraschallgerät (330) und/oder einen Signalprozessor (340) und/oder ein Datenerfassungsgerät (350) aufweist, und wobei Vorortelektronik (320) mit mindestens einer dieser weiteren Einrichtungen signaltechnisch verbunden ist.

14. Vorrichtung nach einem der Ansprüche 10 bis 13, wobei die drehende Welle (100) an einer jeweiligen Stirnseite (120, 125) in einem Lager (400) gelagert ist, welches eine Kabeldurchführung (410), insbesondere mittels eines Rotationsübertragers, aufweist, wobei der eine oder die mehreren Ultraschallwandler (200, 200a, 200b, 200c, 200d, 205) und/oder die Vorortelektronik (320) über die Kabeldurchführung (410) mit der Auswerteeinheit und/oder einer Energieversorgung verbunden sind.

15. Vorrichtung nach einem der Ansprüche 10 bis 14, wobei der eine oder die mehreren Ultraschallwandler (200, 200a, 200b, 200c, 200d, 205) und/oder die Auswerteelektronik (320) eingerichtet sind, sich mittels Energy Harvesting mit ausreichend Energie zu versorgen.

16. Verwendung eines Verfahrens und/oder einer Vorrichtung gemäß einem der vorhergehenden Ansprüche zur Online-Überwachung einer Radsatzwelle in einem Schienenfahrzeug während des Betriebs.

17. Verwendung nach Anspruch 16, wobei bei Detektion eines Fehlers ein Signal an das Betriebspersonal des Schienenfahrzeugs übermittelt wird und/oder das Schienenfahrzeug selbsttätig abgebremst oder angehalten wird.

18. Verwendung eines Verfahrens gemäß einem der Ansprüche 1 bis 9 und/oder einer Vorrichtung gemäß einem der Ansprüche 10 bis 17 zur Online-Überwachung einer Motorwelle oder einer Generatorwelle während des Betriebs des Motors bzw. des Generators.

## Claims

1. A method for purposes of online monitoring of a rotating shaft during normal operation, comprising
Provision of an ultrasonic transducer, which is attached by adhesive and/or a mechanical mounting to an end face of the rotating shaft;
Excitation of a longitudinal ultrasonic wave in the rotating shaft, recording of an ultrasonic echo signal, and
Evaluation of the ultrasonic echo signal in order to detect whether the rotating shaft has an alteration, in particular an error such as a crack, wherein
one or more ultrasonic transducers are provided on at least one end face of the rotating shaft for purposes of excitation and/or recording.

2. The method in accordance with one of the preceding claims, wherein
and/or monitors, a defined angular segment of the shaft.

3. The method in accordance with one of the preceding claims, wherein
the ultrasonic echo signal is recorded at a sampling frequency of at least 10 times the central frequency of the respective ultrasound transducer.

4. The method in accordance with one of the preceding claims, wherein
during evaluation a proportion of the ultrasonic echo signal, which is based on the shape of the rotating shaft, is determined.

5. The method in accordance with claim 4, wherein
the recorded ultrasonic echo signal is compared with a reference signal, to determine the proportion of the ultrasonic echo signal that is based on the shape of the rotating shaft.

6. The method in accordance with claim 4 or 5, wherein
a tolerance range is determined for the proportion of the ultrasonic echo signal, which is based on the shape of the rotating shaft, wherein
the tolerance range, in particular of the temperature and/or the deformation of the shaft under load, can be taken into account.

7. The method in accordance with one of the preceding claims, wherein
in the evaluation a bandpass filter in the time domain and a frequency analysis are used to detect interference signals caused by the operation of the shaft.

8. The method in accordance with one of the preceding claims, wherein
a comparison is made between the recorded ultrasonic echo signal, and a reference signal taken in an earlier measurement, in order to detect or track an alteration in the rotating shaft.

9. The method in accordance with one of the preceding claims, wherein
the recorded ultrasonic echo signal is compared with a reference signal, in order to detect alterations that point to an error function in the measurement system.

10. A method for online monitoring of a rotating shaft (100) during normal operation, comprising
one or more ultrasonic transducers (200, 200a, 200b, 200c, 200d, 205) are attached to at least one end face (120) of the rotating shaft (100) by means of adhesive and/or mechanical mounting, for purposes of exciting at least one longitudinal ultrasonic wave (250) in the rotating shaft, and for receiving an ultrasonic echo signal (260), for purposes of excitation of a longitudinal ultrasonic wave (250) in the rotating shaft, and for purposes of recording an ultrasonic echo signal (260), and
an evaluation unit (300, 310, 320, 330, 340, 350) for purposes of evaluation of the ultrasonic echo signal (260), in order to detect whether the rotating shaft has an alteration, in particular a fault such as a crack, wherein at least one ultrasonic transducer (200, 205) is arranged on opposite end faces (120, 125) of the rotating shaft (120, 125).

11. The device in accordance with claim 10, wherein
three ultrasonic transducers at an angle of 120° relative to each other or four ultrasonic transducers (200a, 200b, 200c, 200d) at an angle of 90° relative to each other are arranged on each end face (120) of the rotating shaft (100).

12. The device in accordance with one of the claims 10 to 11, wherein
the evaluation unit comprises on-site electronics (320) arranged in a longitudinal bore (110) of the rotating shaft (100) and connected to the one or more ultrasonic transducers (200, 200a, 200b, 200c, 200d, 205) .

13. The device in accordance with claim 12, wherein
the evaluation unit further comprises an ultrasound device (330) and/or a signal processor (340) and/or a data acquisition device (350), and wherein
the on-site electronics (320) is connected with at least one of these other facilities by signal technology.

14. The device in accordance with one of the claims 10 to 13, wherein
the rotating shaft (100) is mounted on a respective end face (120, 125) in a bearing (400), which has a cable feedthrough (410), in particular by means of a rotation transmitter, wherein
the one or more ultrasonic transducers (200, 200a, 200b, 200c, 200d, 205) and/or the on-site electronics (320) are connected to the evaluation unit and/or a power supply via the cable feedthrough (410).

15. The device in accordance with one of the claims 10 to 14, wherein
the one or more ultrasonic transducers (200, 200a, 200b, 200c, 200d, 205) and/or the on-site electronics (320) are equipped to provide themselves with sufficient energy by means of energy harvesting.

16. A use of a method and/or device in accordance with one of the preceding claims for the online monitoring of a wheelset shaft in a rail vehicle during operation.

17. The use in accordance with claim 16, wherein
in the event of detection of a fault, a signal is transmitted to the operating personnel of the rail vehicle and/or the rail vehicle is automatically braked or halted.

18. A use of a method in accordance with one of the claims 1 to 9, and/or a device in accordance with one of the claims 10 to 17, for purposes of online monitoring of an engine shaft or a generator shaft during operation of the engine or the generator.

## Revendications

1. Procédé de surveillance en ligne d'un arbre en rotation pendant le fonctionnement normal, comprenant la fourniture et la préparation d'un transducteur à ultrasons, qui est rapporté sur un côté frontal de l'arbre en rotation au moyen d'une colle et/ou d'un support de maintien mécanique ;
l'excitation d'une onde ultrasonore longitudinale dans l'arbre en rotation,
l'enregistrement d'un signal d'écho ultrasonore, et
le traitement du signal d'écho ultrasonore en vue de détecter si l'arbre en rotation présente un changement, notamment un défaut, comme par exemple une fissure, procédé
d'après lequel pour l'excitation et/ou l'enregistrement sont prévus un ou plusieurs transducteurs ultrasonores sur au moins un côté frontal de l'arbre en rotation.

2. Procédé selon l'une des revendications précédentes, d'après lequel un transducteur ultrasonore respectivement considéré assure l'exposition aux ultrasons et/ou la surveillance d'un segment angulaire défini de l'arbre.

3. Procédé selon l'une des revendications précédentes, d'après lequel l'enregistrement du signal d'écho ultrasonore est effectué avec une fréquence d'échantillonnage au moins égale à 10 fois la fréquence centrale d'un transducteur à ultrasons respectif.

4. Procédé selon l'une des revendications précédentes, d'après lequel lors du traitement on détermine une fraction du signal d'écho ultrasonore, qui repose sur la forme de l'arbre en rotation.

5. Procédé selon la revendication 4, d'après lequel le signal d'écho ultrasonore enregistré est comparé à un signal de référence, pour déterminer la fraction du signal d'écho ultrasonore, qui repose sur la forme de l'arbre en rotation.

6. Procédé selon la revendication 4 ou la revendication 5, d'après lequel au moins une plage de tolérance est prise en considération pour la fraction du signal d'écho ultrasonore, qui repose sur la forme de l'arbre en rotation, la plage de tolérance prenant en considération notamment la température et/ou la déformation de l'arbre sous charge.

7. Procédé selon l'une des revendications précédentes, d'après lequel lors du traitement sont utilisés des filtres passe-bande dans le domaine du temps et une analyse de fréquence, en vue de détecter des signaux parasites engendrés par le fonctionnement de l'arbre.

8. Procédé selon l'une des revendications précédentes, d'après lequel le signal d'écho ultrasonore enregistré est comparé à un signal de référence, qui a été enregistré lors d'une mesure antérieure, en vue de détecter ou de suivre un changement intervenu sur l'arbre en rotation.

9. Procédé selon l'une des revendications précédentes, d'après lequel le signal d'écho ultrasonore enregistré est comparé à un signal de référence, en vue de détecter des changements, qui évoquent un défaut de fonctionnement du système de mesure.

10. Dispositif de surveillance en ligne d'un arbre en rotation (100) pendant le fonctionnement normal, comprenant l'arbre (100),
un ou plusieurs transducteurs à ultrasons (200, 200a, 200b, 200c, 200d, 205) rapportés sur au moins un côté frontal (120) de l'arbre en rotation (100) au moyen d'une colle et/ou d'un support de maintien mécanique, et destinés à assurer l'excitation d'au moins une onde ultrasonore (250) longitudinale dans l'arbre en rotation, et destinés à enregistrer un signal d'écho ultrasonore(260), et
une unité de traitement (300, 310, 320, 330, 340, 350) pour assurer le traitement du signal d'écho ultrasonore (260), en vue de détecter si l'arbre en rotation présente un changement, notamment un défaut comme par exemple une fissure,
dispositif
dans lequel sur des côtés frontaux (120, 125) opposés de l'arbre en rotation (100), est agencé respectivement au moins un transducteur à ultrasons (200, 205).

11. Dispositif selon la revendication 10, dans lequel trois transducteurs à ultrasons sont agencés selon un espacement angulaire mutuel respectif de 120°, ou quatre transducteurs à ultrasons (200a, 200b, 200c, 200d) sont agencés selon un espacement angulaire mutuel respectif de 90°, sur un côté frontal (120) de l'arbre en rotation (100) .

12. Dispositif selon la revendication 10 ou la revendication 11, dans lequel l'unité de traitement comprend une électronique sur site (320), qui est agencée dans un alésage longitudinal (110) de l'arbre en rotation (100), et est reliée audit un ou aux plusieurs transducteurs à ultrasons (200, 200a, 200b, 200c, 200d, 205) .

13. Dispositif selon la revendication 12, dans lequel l'unité de traitement comprend, par ailleurs, un appareil à ultrasons (330) et/ou un processeur de signal (340) et/ou un appareil de relevé de données (350), et dans lequel l'électronique sur site (320) est reliée, sur le plan de la technologie du traitement de signal, à l'un au moins de ces dits autres appareils.

14. Dispositif selon l'une des revendications 10 à 13, dans lequel l'arbre en rotation (100) est monté, au niveau d'un côté frontal respectif (120, 125), dans un palier (400), qui présente un passage de câble (410), notamment par l'intermédiaire d'un transmetteur rotatif, et dans lequel ledit un ou lesdits plusieurs transducteurs à ultrasons (200, 200a, 200b, 200c, 200d, 205) et/ou l'électronique sur site (320), sont reliés, par l'intermédiaire du passage de câble (410), à l'unité de traitement et/ou à une alimentation en énergie.

15. Dispositif selon l'une des revendications 10 à 14, dans lequel ledit un ou lesdits plusieurs transducteurs à ultrasons (200, 200a, 200b, 200c, 200d, 205) et/ou l'électronique de traitement (320) sont conçus pour s'alimenter avec suffisamment d'énergie par captage d'énergie (energy harvesting).

16. Utilisation du procédé et/ou d'un dispositif selon l'une des revendications précédentes, pour la surveillance en ligne d'un arbre d'essieu de roues dans un véhicule sur rails, pendant le fonctionnement.

17. Utilisation selon la revendication 16, d'après laquelle dans le cas d'une détection d'un défaut, un signal est transmis au personnel de service du véhicule sur rail, et/ou le véhicule sur rail est freiné et/ou arrêté de manière autonome.

18. Utilisation d'un procédé selon l'une des revendications 1 à 9 et/ou d'un dispositif selon l'une des revendications 10 à 17 pour la surveillance en ligne d'un arbre de moteur ou d'un arbre de générateur pendant le fonctionnement du moteur ou respectivement du générateur.
